# EUROPÄISCHE PATENTSCHRIFT

(11) **EP 3 996 861 B1**
(45) Veröffentlichungstag und Bekanntmachung des Hinweises auf die Patenterteilung: **09.08.2023**
(21) Anmeldenummer: 20739239.0
(22) Anmeldetag: 23.06.2020
(51) Int. Cl.: B23C 5/20, B23C 5/06

(54) **DOPPELSEITIGER SCHNEIDEINSATZ ZUM FRÄSEN**
DOUBLE-SIDED CUTTING INSERT FOR MILLING
PLAQUETTE DE COUPE DOUBLE FACE POUR FRAISAGE

(30) Priorität: 11.07.2019 AT 7419 U
(43) Veröffentlichungstag der Anmeldung: 18.05.2022
(73) Patentinhaber: Ceratizit Austria Gesellschaft m.b.H., 6600 Reutte (AT)
(72) Erfinder: BURTSCHER, Peter, 6600 Reutte (AT)
(74) Vertreter: Ciesla, Dirk
(86) Internationale Anmeldenummer: PCT/AT2020/060250
(87) Internationale Veröffentlichungsnummer: WO 2021/003506

(56) Entgegenhaltungen:
- EP-B1- 2 747 925
- WO-A1-95/20452
- CN-A- 103 894 660
- DE-A1- 19 848 045
- US-A1- 2007 003 384
- US-A1- 2014 199 127

## Beschreibung

Die vorliegende Erfindung betrifft einen doppelseitigen Schneideinsatz zum Fräsen gemäß dem Oberbegriff des Anspruchs 1 und ein Fräswerkzeug mit zumindest einem an diesem angeordneten Schneideinsatz. Ein solcher Schneideinsatz ist beispielsweise aus US 2007/003384 A1 bekannt.

Zur zerspanenden Bearbeitung von insbesondere metallischen Werkstoffen kommen häufig Fräswerkzeuge zum Einsatz, die einen Trägerkörper ausweisen, der mit einem Schneideinsatz oder einer Mehrzahl von Schneideinsätzen versehen ist. Die Schneideinsätze sind dabei üblicherweise austauschbar und müssen aufgrund von auftretendem Verschleiß in mehr oder weniger regelmäßigen Intervallen ausgetauscht werden. Es ist bekannt, die Schneideinsätze als sogenannte Wendeschneidplatten (indexierbare Schneideinsätze, "indexable cutting inserts") auszubilden, die eine Mehrzahl von identisch ausgebildeten Schneidkantenabschnitten aufweisen, die sukzessive nacheinander durch eine Veränderung der relativen Ausrichtung (Indexierung) des Schneideinsatzes zu dem Trägerkörper des Fräswerkzeugs in eine aktive Position gebracht werden können, in der diese eine zerspanende Bearbeitung des zu bearbeitenden Werkstücks durchführen. Die jeweils inaktiven Schneidkantenabschnitte treten dabei nicht mit dem Werkstück in Eingriff und können z.B. nach einem Verschleiß des zuvor aktiven Schneidkantenabschnitts in die aktive Position gebracht werden. In dieser Weise werden mehrere unabhängig voneinander zur Verfügung stehende Schneidkantenabschnitte bereitgestellt, die eine effiziente Ausnutzung des Schneideinsatzes ermöglichen. Vorliegend wird die bei einer Anordnung an dem Fräswerkzeug jeweils in einer aktiven Schneidposition befindliche Hauptschneide als aktive Hauptschneide bezeichnet und die in einer aktiven Schneidposition befindliche Planschneide als aktive Planschneide. Die jeweils anderen, durch Indexierung nutzbaren Hauptschneiden und Planschneiden werden als inaktive Hauptschneiden bzw. inaktive Planschneiden bezeichnet.

Die auswechselbaren Schneideinsätze sind üblicherweise aus einem harten und verschleißbeständigen Material, wie insbesondere Hartmetall (cemented carbide), Cermet oder einer Schneidkeramik gebildet und können zudem auch noch mit einer verschleißbeständigen Hartstoffbeschichtung versehen sein. Der Trägerkörper ist typischerweise aus einem zäheren Material, wie insbesondere Stahl gebildet, wobei teilweise z.B. auch ein zäheres Hartmetall oder andere Materialien zum Einsatz kommen.

Um eine möglichst effiziente Ausnutzung des Schneideinsatzes zu erzielen, ist es bekannt, doppelseitige Schneideinsätze zu verwenden, die sowohl an dem Übergang zwischen einer Oberseite und einer umlaufenden Seitenfläche als auch an dem Übergang zwischen einer Unterseite und der umlaufenden Seitenfläche jeweils mit einer Schneidkante versehen sind, die eine Mehrzahl von unabhängig voneinander verwendbaren Schneidkantenabschnitten aufweist.

Insbesondere zum Planfräsen kommen häufig Wendeschneidplatten vom sogenannten S-Typ (square, quadratisch) zum Einsatz, die eine quadratische Grundform mit vier Hauptschneiden, die im Wesentlichen entlang den Seiten eines Quadrats verlaufen, pro Schneidkante aufweisen. Dabei sind zwischen benachbarten Hauptschneiden - über angehobene und abgesenkte Schneidecken - anschließende Planschneiden angeordnet, die sich z.B. typischerweise in einem Winkel von ca. 135° relativ zu den Hauptschneiden erstrecken können. In einem eingebauten Zustand des Schneideinsatzes in einem Fräswerkzeug ist dabei eine Planschneide üblicherweise im Wesentlichen senkrecht zu einer Rotationsachse des Fräswerkzeugs angeordnet und dient als die Oberfläche glättende Planschneide. Die in Bezug auf das Fräswerkzeug radial außen über eine angehobene Schneidecke an die Planschneide anschließende Hauptschneide dient als hauptsächlich spanabhebende Schneide.

Um im Betrieb eine Abnutzung bzw. Beschädigung der Bezüglich der Rotation des Fräswerkzeugs hinteren Schneidkante des doppelseitigen Schneideinsatzes zu vermeiden, muss der Schneideinsatz derart geneigt in dem Fräswerkzeug angeordnet werden, dass dieser sowohl bezüglich der axialen Richtung unter einem negativen axialen Einbauwinkel nach vorne gekippt ist, um die hinter der in das Werkstück eingreifenden aktiven Planschneide befindliche inaktive Planschneide der anderen Schneidkante zu schützen, als auch bezüglich der radialen Richtung unter einem negativen radialen Einbauwinkel gekippt ist, um die hinter der in das Werkstück eingreifenden aktiven Hauptschneide befindliche inaktive Hauptschneide der anderen Schneidkante zu schützen. Ein starkes Verkippen in axialer und/oder radialer Richtung kann sowohl in Bezug auf die wirkenden Schneidkräfte als auch in Bezug auf die Spanbildung zu Problemen führen.

Es ist zu beachten, dass in dem vorliegenden technischen Gebiet gewisse Begriffe wie z.B. Freiwinkel, Spanwinkel etc. einerseits "nominell" in Bezug auf den Schneideinsatz definiert werden können und andererseits auch (abweichend) "effektiv" in Bezug auf die Einbaulage des Schneideinsatzes an einem Fräswerkzeug relativ zu dem Werkstück definiert werden können. Im Rahmen der vorliegenden Beschreibung werden im Rahmen der Beschreibung des Schneideinsatzes nominelle Winkelangaben verwendet, wohingegen in Bezug auf das Fräswerkzeug mit darin eingebauten Schneideinsätzen effektive Winkelangaben verwendet werden.

Insbesondere bei mit doppelseitigen Schneideinsätzen bestückten Fräswerkzeugen ist die Stabilität des Fräsprozesses sehr sensibel von den realisierten effektiven Spanwinkeln und effektiven Freiwinkeln abhängig, wobei die doppelseitige Ausbildung der Schneideinsätze den Gestaltungsspielraum extrem einschränkt.

EP 2 747 925 A1 beschreibt einen doppelseitigen Schneideinsatz zum Planfräsen und ein Fräswerkzeug zum Planfräsen mit einer Mehrzahl solcher Schneideinsätze.

Es ist Aufgabe der vorliegende Erfindung einen verbesserten doppelseitigen Schneideinsatz zum Fräsen und ein verbessertes Fräswerkzeug mit zumindest einem solchen Schneideinsatz bereitzustellen, mit denen ein besonders weicher Schnitt und ein besonders stabiler Fräsprozess insbesondere beim Planfräsen ermöglicht werden.

Die Aufgabe wird durch einen doppelseitigen Schneideinsatz zum Fräsen nach Anspruch 1 gelöst. Vorteilhafte Weiterbildungen sind in den abhängigen Ansprüchen angegeben.

Der doppelseitige Schneideinsatz zum Fräsen hat: eine Oberseite; eine Unterseite; eine umlaufende Seitenfläche; eine erste Schneidkante, die an einem Übergang von der Oberseite zu der umlaufenden Seitenfläche ausgebildet ist; eine zweite Schneidkante, die an einem Übergang von der Unterseite zu der umlaufenden Seitenfläche ausgebildet ist; eine Symmetrieachse, bezüglich der der Schneideinsatz vierzählige Rotationssymmetrie aufweist; und eine senkrecht zu der Symmetrieachse verlaufende Referenzebene, die den Schneideinsatz in zwei Hälften unterteilt. Die erste Schneidkante und die zweite Schneidkante weisen jeweils auf: alternierend angeordnete Hauptschneiden und Planschneiden, die sich jeweils zwischen angehobenen Schneidecken und abgesenkten Schneidecken, die einen geringeren Abstand zu der Referenzebene als die angehobenen Schneidecken haben, erstrecken. Die umlaufende Seitenfläche weist sich jeweils entlang der Planschneide erstreckende Planfreiflächen auf, die sich mit zunehmendem Abstand von der zugeordneten Planschneide der Symmetrieachse annähern. Die umlaufende Seitenfläche weist sich jeweils entlang der Hauptschneide erstreckende Hauptfreiflächen auf, die sich mit zunehmendem Abstand von der zugeordneten Hauptschneide von der Symmetrieachse entfernen.

Da sich einerseits die Planfreiflächen mit zunehmendem Abstand von der zugeordneten Planschneide der Symmetrieachse annähern, die Planfreiflächen also mit positiven nominellen Planfreiwinkeln ausgebildet sind, und sich andererseits die Hauptfreiflächen mit zunehmendem Abstand von der zugeordneten Hauptschneide von der Symmetrieachse entfernen, die Hauptfreiflächen also mit negativen nominellen Hauptfreiwinkeln ausgebildet sind, wird in Kombination eine Einbaulage des doppelseitigen Schneideinsatzes in ein Fräswerkzeug zum Planfräsen ermöglicht, bei dem der Einbau unter einem betragsmäßig relativ kleinen negativen axialen Einbauwinkel, d.h. einem nur leicht negativen axialen Einbauwinkel, und unter einem betragsmäßig viel größeren negativen radialen Einbauwinkel, d.h. einem viel stärker negativen radialen Einbauwinkel, ermöglicht wird. Diese Kombination ermöglicht es, an der Hauptschneide im eingebauten Zustand einen sehr großen positiven effektiven Axialwinkel vorzusehen, mit dem ein sehr weiches, schälendes Zerspanungsverhalten und eine sehr gute Spanabfuhr erreicht werden. Durch die negativen nominellen Hauptfreiwinkel werden dabei trotz der extremen Einbaulage ein stabiler Schneidkeil an der Hauptschneide und ein für das zu bearbeitende Material optimaler Freiwinkel ermöglicht sowie die rückseitigen inaktiven Haupt- und Planschneiden zuverlässig gegen Verschleiß geschützt.

Gemäß einer Weiterbildung hat der Schneideinsatz eine in Aufsicht auf die Oberseite im Wesentlichen quadratische Grundform mit abgeschrägten Ecken, die Hauptschneiden erstrecken sich entlang den Hauptseiten der quadratischen Grundform und die Planschneiden erstrecken sich entlang den abgeschrägten Ecken. Mit dieser Ausgestaltung wird eine optimierte Ausrichtung der aktiven Hauptschneide und der aktiven Nebenschneide ermöglicht. Bevorzugt sind die erste Schneidkante und die zweite Schneidkante jeweils durch vier Hauptschneiden und vier Planschneiden, die über die angehobenen Schneidecken und die abgesenkten Schneidecken miteinander verbunden sind, gebildet.

Gemäß einer Weiterbildung weisen die Hauptschneiden in Aufsicht auf die Oberseite bzw. auf die Unterseite jeweils Innenwinkel im Bereich zwischen 130° und 140° mit den benachbarten Planschneiden auf. Dabei kann der Innenwinkel zwischen der Hauptschneide und der über eine abgesenkte Schneidecke zu dieser benachbarten Planschneide z.B. gleich zu dem Innenwinkel zwischen der Hauptschneide und der über eine angehobene Schneidecke zu dieser benachbarten Planschneide sein oder die beiden Innenwinkel können sich auch voneinander unterscheiden, wobei in diesem Fall die jeweiligen Innenwinkel jeweils im Bereich zwischen 130° und 140° liegen sollten. Mit dieser Ausgestaltung wird eine besonders vorteilhafte Ausrichtung der Haupt- und Planschneide beim Planfräsen erreicht.

Gemäß einer Weiterbildung erstrecken sich die Planfreiflächen jeweils als ebene Flächen entlang der gesamten Planschneide von einer angehobenen Schneidecke bis zu einer abgesenkten Schneidecke. In diesem Fall kann eine besonders glatte bearbeitete Werkstückoberfläche erzielt werden. Die Planschneiden erstrecken sich von der angehobenen Schneidecke bis zu der abgesenkten Schneidecke. Dabei können sich die Planschneiden von der angehobenen Schneidecke bis zu der abgesenkten Schneidecke monoton fallend der Referenzebene nähern.

Bevorzugt kann die Planschneide in Aufsicht auf die Oberseite gerade ausgebildet sein.

Gemäß einer Weiterbildung erstrecken sich die Hauptfreiflächen jeweils als ebene Flächen entlang der gesamten Hauptschneide von einer angehobenen Schneidecke bis zu einer abgesenkten Schneidecke. In diesem Fall ist eine besonders lange, zur Zerspanung nutzbare Hauptschneide ermöglicht. Die Hauptschneide erstreckt sich von der angehobenen Schneidecke bis zu der abgesenkten Schneidecke. Insbesondere kann sich die Hauptschneide von der angehobenen Schneidecke bis zu der abgesenkten Schneidecke monoton fallend der Referenzebene nähern.

Bevorzugt kann die Hauptschneide in Aufsicht auf die Oberseite gerade ausgebildet sein.

Gemäß einer Weiterbildung sind die Oberseite und die Unterseite jeweils angrenzend an die Hauptschneiden mit einer Hauptspanflächenfase und angrenzend an die Planschneiden mit einer Planspanflächenfase versehen. In dieser Weise wird eine besonders robuste Auslegung des Schneideinsatzes ermöglicht. Die Hauptspanflächenfase und die Planspanflächenfase weisen dabei bevorzugt jeweils eine (senkrecht zur Hauptschneide bzw. zur Planschneide zu messende) Breite im Bereich von 0,1-0,4 mm auf. Dabei können die Breite der Planspanflächenfase und die Breite der Hauptspanflächenfase bevorzugt zumindest im Wesentlichen gleich sein.

Gemäß einer Weiterbildung ist ein nomineller Fasenwinkel der Planspanflächenfase kleiner als ein nomineller Fasenwinkel der Hauptspanflächenfase. Diese Ausbildung ermöglicht es, bei einer Einbaulage unter einem großen negativen radialen Einbauwinkel und unter einem kleinen negativen axialen Einbauwinkel sowohl die aktive Hauptschneide als auch die aktive Planschneide zuverlässig zu schützen und gleichzeitig die Hauptschneide und die Planschneide optimal auf das zu bearbeitende Material abzustimmen. Bevorzugt kann der nominelle (also der an dem Schneideinsatz zu messende) Fasenwinkel der Planspanflächenfase dabei zumindest 8° kleiner als der nominelle (an dem Schneideinsatz zu messende) Fasenwinkel der Hauptspanflächenfase sein. Es ist zu beachten, dass z.B. der nominelle Fasenwinkel der Hauptspanflächenfase positiv sein kann und der nominelle Fasenwinkel der Planspanflächenfase negativ oder auch z.B. beide negativ sein können. Besonders bevorzugt kann der nominelle Fasenwinkel der Planspanflächenfase zumindest 10° kleiner als der nominelle Fasenwinkel der Hauptspanflächenfase sein. Bevorzugt ist der nominelle Fasenwinkel der Planspanflächenfase dabei höchstens 20° kleiner als der nominelle Fasenwinkel der Hauptspanflächenfase.

Die Aufgabe wird auch durch ein Fräswerkzeug nach Anspruch 10 gelöst. Vorteilhafte Weiterbildungen sind in den abhängigen Ansprüchen angegeben.

Das Fräswerkzeug hat einen Grundkörper, der zumindest einen Sitz zur Aufnahme eines Schneideinsatzes und zumindest einen an dem Sitz angeordneten Schneideinsatz nach einem der vorangehenden Ansprüche aufweist. Mit dem Fräswerkzeug werden die zuvor mit Bezug auf den doppelseitigen Schneideinsatz beschriebenen Vorteile erzielt. Bevorzugt kann der Grundkörper des Fräswerkzeugs eine Mehrzahl von über den Umfang des Grundkörpers verteilten Sitzen zur Aufnahme von gleichen Schneideinsätzen aufweisen. Dabei kann bevorzugt eine Mehrzahl von Schneideinsätzen an den Sitzen befestigt sein. Bevorzugt können die Schneideinsätze mit derselben Ausrichtung an den Sitzen befestigt sein. Das Fräswerkzeug kann bevorzugt insbesondere als Planfräswerkzeug ausgebildet sein. Der Schneideinsatz ist dabei derart angeordnet, dass sich eine aktive Planschneide im Wesentlichen senkrecht zu einer Rotationsachse des Fräswerkzeugs erstreckt. Eine leichte Abweichung von einer exakt senkrechten Anordnung ist jedoch möglich, insbesondere kann die Planschneide leicht in Richtung der Rotationsachse des Fräswerkzeugs in axialer Richtung nach hinten freigestellt sein.

Gemäß einer Weiterbildung weist der Sitz eine Hauptanlagefläche zur Abstützung einer sich parallel zu der Referenzebene erstreckenden Hauptauflagefläche des Schneideinsatzes auf und die Hauptanlagefläche erstreckt sich unter einem negativen axialen Einbauwinkel und unter einem negativen radialen Einbauwinkel, wobei radiale Einbauwinkel zumindest 10° kleiner als der axiale Einbauwinkel ist. Dies bedeutet, dass sowohl der axiale Einbauwinkel als auch der radiale Einbauwinkel jeweils negativ sind, der radiale Einbauwinkel aber viel stärker negativ als der axiale Einbauwinkel ist. Die Kombination aus einem negativen axialen Einbauwinkel und einem viel stärker negativen radialen Einbauwinkel ermöglicht es, an der Hauptschneide im eingebauten Zustand einen sehr großen positiven effektiven Axialwinkel zu realisieren, mit dem ein sehr weiches, schälendes Zerspanungsverhalten und eine sehr gute Spanabfuhr erreicht werden, und gleichzeitig die rückseitigen inaktiven Hauptschneiden und Planschneiden zuverlässig zu schützen. Bevorzugt kann der radiale Einbauwinkel zumindest 15° kleiner sein als der axiale Einbauwinkel. Dabei ist der radiale Einbauwinkel bevorzugt höchstens 20° kleiner als der axiale Einbauwinkel, damit der Schneideinsatz mit einer robusten, stabilen Form ausgebildet werden kann.

Bevorzugt kann der axiale Einbauwinkel in einem Bereich von -1° bis -5° liegen, besonders bevorzugt in einem Bereich von -2° bis -4°, damit einerseits ein ausreichender Schutz der inaktiven Hauptschneiden und Nebenschneiden bewirkt wird und andererseits ein sehr weicher Schnitt ermöglicht wird.

Bevorzugt kann der radiale Einbauwinkel in einem Bereich von -15° bis -21 ° liegen, besonders bevorzugt in einem Bereich von -17° bis -19°. In diesem Fall wird ein Einbau unter einem im Vergleich zu dem radialen Einbauwinkel nur sehr leicht negativen axialen Einbauwinkel ermöglicht, mit dem ein besonders weicher Schnitt der Hauptschneide ermöglicht wird.

Gemäß einer Weiterbildung ist der Schneideinsatz derart angeordnet ist, dass sich eine aktive Hauptschneide unter einem effektiven Axialwinkel im Bereich von 16°-24°, bevorzugt von 18°-22° erstreckt. In diesem Fall werden ein sehr weiches, schälendes Zerspanungsverhalten und eine sehr gute Spanabfuhr erreicht.

Gemäß einer Weiterbildung ist der Schneideinsatz derart an dem Fräswerkzeug angeordnet, dass der an der aktiven Hauptschneide ausgebildete effektive Hauptfreiwinkel im Bereich von 8°-12° liegt und der an der aktiven Planschneide ausgebildete effektive Planfreiwinkel ebenfalls im Bereich von 8°-12° liegt. In diesem Fall wird eine besonders vorteilhafte Spanbildung bei gleichzeitig hoher Lebensdauer des Schneideinsatzes erzielt.

Gemäß einer Weiterbildung ist der Schneideinsatz mit einer Planspanflächenfase und mit einer Hauptspanflächenfase versehen und derart angeordnet, dass ein effektiver Fasenwinkel der Planspanflächenfase und ein effektiver Fasenwinkel der Hauptspanflächenfase im eingebauten Zustand im Wesentlichen gleich groß sind. Unter "im Wesentlichen gleich groß" ist zu verstehen, dass der Unterschied weniger als 5° beträgt, bevorzugt weniger als 3°. In diesem Fall wird ein besonders vorteilhaftes Zerspanungsverhalten erzielt.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Darstellung eines doppelseitigen Schneideinsatzes gemäß einer Ausführungsform;
- Fig. 2:: eine schematische Aufsicht des Schneideinsatzes aus Fig. 1;
- Fig. 3:: eine Schnittdarstellung entlang den Linien A-A in Fig. 2;
- Fig. 4:: eine Schnittdarstellung entlang den Linien B-B in Fig. 2;
- Fig. 5:: eine schematische Seitenansicht des Schneideinsatzes auf Hauptfreiflächen mit einer Blickrichtung senkrecht zur Symmetrieachse des Schneideinsatzes;
- Fig. 6:: eine schematische Seitenansicht des Schneideinsatzes auf Nebenfreiflächen mit einer Blickrichtung senkrecht zur Symmetrieachse des Schneideinsatzes;
- Fig. 7:: eine schematische Seitenansicht eines Grundkörpers eines Fräswerkzeugs gemäß einer Ausführungsform mit Blickrichtung senkrecht zu einer Rotationsachse des Fräswerkzeugs;
- Fig. 8:: eine schematische Stirnansicht des Grundkörpers aus Fig. 7 mit Blickrichtung entlang der Rotationsachse;
- Fig. 9:: eine schematische Seitenansicht eines Fräswerkzeugs gemäß einer Ausführungsform mit montierten Schneideinsätzen mit Blickrichtung senkrecht zu der Rotationsachse des Fräswerkzeugs;
- Fig. 10:: eine schematische Stirnansicht des Fräswerkzeugs aus Fig. 9 mit Blickrichtung entlang der Rotationsachse; und
- Fig. 11:: eine schematische perspektivische Ansicht des Fräswerkzeugs.

### AUSFÜHRUNGSFORM

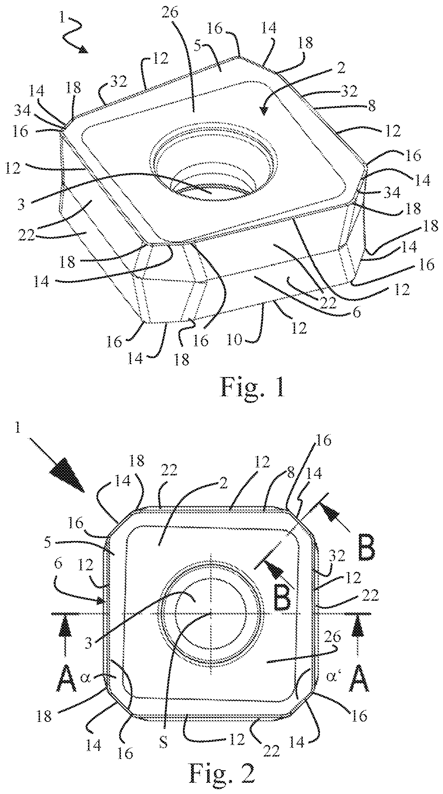

Eine Ausführungsform wird im Folgenden unter Bezugnahme auf die Figuren beschrieben. Dabei wird zunächst der doppelseitige Schneideinsatz 1 zum Fräsen unter Bezug auf die Figuren 1 bis 6 beschrieben und anschließend das Fräswerkzeug 100 mit den daran angeordneten Schneideinsätzen. Der Schneideinsatz 1 und das Fräswerkzeug 100 sind zum Planfräsen ausgebildet.

Wie in den Fig. 1 bis Fig. 6 zu sehen ist, weist der doppelseitige Schneideinsatz 1 eine im Wesentlichen quadratische Grundform auf, bei der die Ecken abgeschrägt sind, wie insbesondere in der in Fig. 2 dargestellten Aufsicht zu sehen ist.

Der Schneideinsatz 1 hat eine Oberseite 2, eine dieser gegenüberliegende Unterseite 4, sowie eine umlaufende Seitenfläche 6, die sich zwischen der Oberseite 2 und der Unterseite 4 erstreckt. An einem Übergang von der Oberseite 2 zu der umlaufenden Seitenfläche 6 ist eine erste Schneidkante 8 ausgebildet, die sich bei der dargestellten Ausführungsform über den gesamten Umfang erstreckt. In gleicher Weise ist an dem Übergang von der Unterseite 4 zu der umlaufenden Seitenfläche 6 eine zweite Schneidkante 10 ausgebildet, die sich bei der dargestellten Ausführungsform ebenfalls über den gesamten Umfang erstreckt.

Ein Durchgangsloch 3 zur Aufnahme einer Befestigungsschraube, mit der der Schneideinsatz 1 an einem Sitz eines Fräswerkzeugs befestigt werden kann, erstreckt sich von der Oberseite 2 bis zu der Unterseite 4 entlang einer Symmetrieachse S des Schneideinsatzes 1. Eine Referenzebene R erstreckt sich senkrecht zu der Symmetrieachse S und unterteilt den Schneideinsatz 1 (virtuell) in zwei identische Hälften. Der Schneideinsatz 1 hat bezüglich der Symmetrieachse S eine vierzählige Rotationssymmetrie, d.h. er kann durch Rotation um jeweils weitere 90° um die Symmetrieachse S in dieselbe Form übergeführt werden. Der Schneideinsatz 1 ist ferner punktsymmetrisch bezüglich dem Schnittpunkt der Symmetrieachse S mit der Referenzebene R, sodass die ersten Schneidkante 8 und die zweite Schneidkante 10 im Wesentlichen identisch zueinander ausgebildet sind.

Wie insbesondere in den Fig. 1 und Fig. 2 zu sehen ist, sind die Oberseite 2 und die Unterseite 4 jeweils mit einer Hauptauflagefläche 26 versehen, die sich parallel zu der Referenzebene R erstreckt. Die Hauptauflagefläche 26 umgibt jeweils das Durchgangsloch 3. Zwischen der ersten Schneidkante 8 und der Hauptauflagefläche 26 ist die Oberseite 2 mit einer Spanfläche 5 versehen, die sich mit zunehmendem Abstand von der ersten Schneidkante 8 der Referenzebene R annähert. Entsprechend ist zwischen der zweiten Schneidkante 10 und der Hauptauflagefläche 26 in der Unterseite 4 eine Spanfläche 5 ausgebildet, die sich mit zunehmendem Abstand von der zweiten Schneidkante 10 der Referenzebene R annähert.

Die erste Schneidkante 8 und die zweite Schneidkante 10 weisen jeweils alternierend angeordnete Hauptschneiden 12 und Planschneiden 14 auf. Die Hauptschneiden 12 sind dazu ausgebildet, bei einem Planfräsen hauptsächlich den Span abzuheben, und die Planschneiden 14 dienen dazu, die erzeugte Oberfläche zu glätten. Die Hauptschneiden 12 erstrecken sich entlang den langen Seitenkanten der im Wesentlichen quadratischen Grundform des Schneideinsatzes 1. Die Planschneiden 14 erstrecken sich entlang den abgeschrägten Ecken der im Wesentlichen quadratischen Grundform des Schneideinsatzes 1.

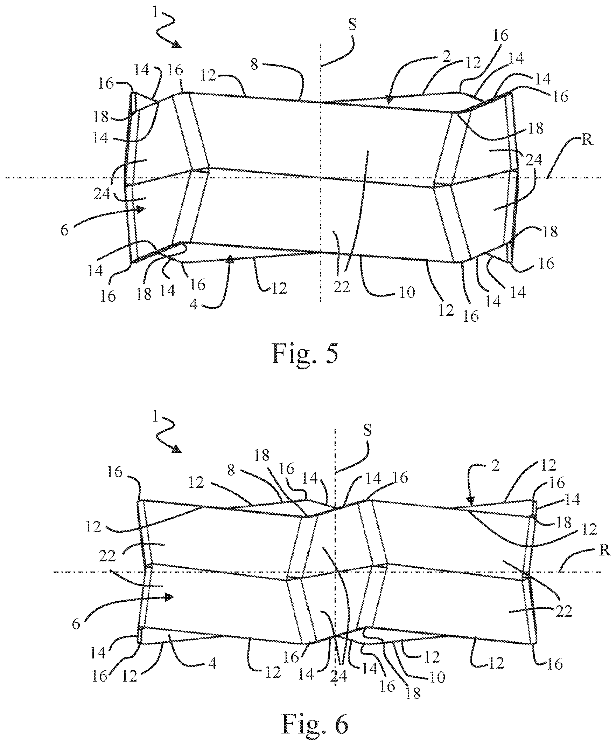

Wie insbesondere in den Fig. 5 und Fig. 6 zu sehen ist, haben die erste Schneidkante 8 und die zweite Schneidkante 10 abwechselnd angehobene Schneidecken 16, die einen größeren Abstand zu der Referenzebene R haben, und abgesenkte Schneidecken 18, die einen geringeren Abstand zu der Referenzebene R aufweisen. Eine Hauptschneide 12 erstreckt sich jeweils von einer angehobenen Schneidecke 16 bis zu einer abgesenkten Schneidecke 18. Eine Planschneide 14 erstreckt sich jeweils von einer abgesenkten Schneidecke 18 bis zu einer angehobenen Schneidecke 16 und geht über diese in die benachbarte Hauptschneide 12 über. Eine Planschneide 14 und die über die angehobene Schneidecke 16 benachbarte Hauptschneide 12 bilden jeweils einen Schneidkantenabschnitt, der zum Planfräsen in eine aktive Schneidstellung gebracht werden kann, wie nachstehend noch ausführlicher erläutert wird. Die Hauptschneide 12 grenzt jeweils über die abgesenkte Schneidecke 18 an die Planschneide 14 eines benachbarten Schneidkantenabschnitts an, der durch Indexierung nachfolgend benutzt werden kann.

In Blickrichtung entlang der Symmetrieachse S schließen eine Planschneide 14 und die über eine angehobene Schneidecke 16 mit dieser benachbarte Hauptschneide 12 jeweils einen Innenwinkel α' im Bereich von 130° bis 140° miteinander ein. Eine Hauptschneide 12 schließt in Blickrichtung entlang der Symmetrieachse S mit der über eine abgesenkte Schneidecke 18 benachbarten Planschneide 14 jeweils einen Innenwinkel α im Bereich von 130° bis 140° ein. Es ist zu beachten, dass die Innenwinkel α und α' z.B. gleich sein können, insbesondere z.B. 135° betragen können, oder sich aber auch voneinander unterscheiden können.

Die Hauptschneide 12 erstreckt sich derart, dass sie sich mit zunehmendem Abstand von der angehobenen Schneidecke 18 der Referenzebene R annähert. Die Hauptschneide 12 kann sich dabei bevorzugt monoton fallend der Referenzebene R annähern, wie in den Fig. 5 und Fig. 6 dargestellt ist. Bei der dargestellten Ausführungsform erstreckt sich die Hauptschneide 12 in Aufsicht auf die Oberseite 2 bzw. Unterseite 4 im Wesentlichen geradlinig. Die Hauptschneide 12 erstreckt sich bei der Ausführungsform auch in einer Seitenansicht senkrecht zur Symmetrieachse S im Wesentlichen geradlinig. Es ist jedoch zu beachten, die die Hauptschneide 12 sowohl in Aufsicht auf die Oberseite 2 bzw. Unterseite 4 als auch in der Seitenansicht eine leicht gekrümmte Form aufweisen kann.

Die Planschneide 14 erstreckt sich bei der Ausführungsform ebenfalls derart, dass sie sich mit zunehmendem Abstand von der angehobenen Schneidecke 16 der Referenzebene R annähert. Auch die Planschneide 14 kann sich bevorzugt monoton fallend der Referenzebene R annähern. Die Planschneide 14 erstreckt sich bei der Ausführungsform ebenfalls sowohl in Aufsicht auf die Oberseite 2 bzw. Unterseite 4 als auch in einer Seitenansicht senkrecht zur Symmetrieachse S im Wesentlichen geradlinig. Es ist zu beachten, dass auch die Planschneide 14 eine leicht gekrümmte Form aufweisen kann.

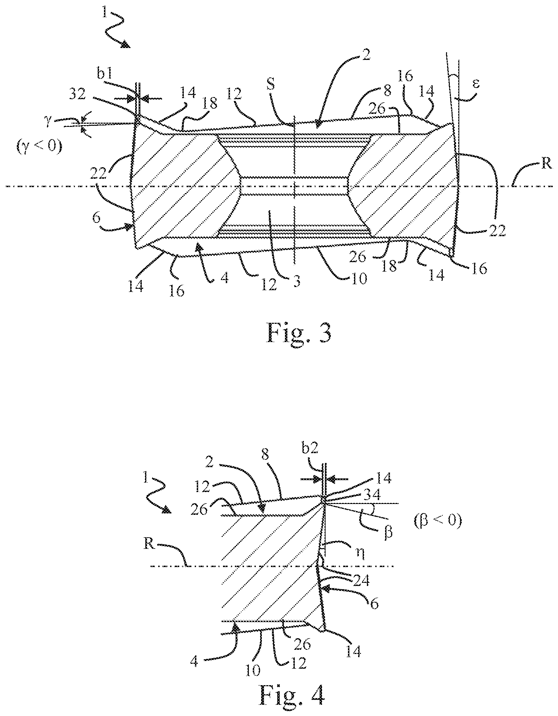

Wie insbesondere in den Fig. 1 und Fig. 3 zu sehen ist, ist unmittelbar angrenzend an die Hauptschneide 12 eine Hauptspanflächenfase 32 ausgebildet, die einer gezielten Verstärkung des Schneidkeils dient. Die Hauptspanflächenfase 32 weist eine (senkrecht zur Hauptschneide zu messende) Breite b1 im Bereich von 0,1-0,4 mm auf. Die Hauptspanflächenfase 32 weist bei der Ausführungsform einen negativen nominellen Fasenwinkel γ auf, wie in Fig. 3 zu sehen ist. Es ist jedoch zu beachten, dass auch ein positiver nomineller Fasenwinkel möglich ist.

Wie in den Fig. 1 und Fig. 4 zu sehen ist, ist unmittelbar angrenzend an die Planschneide 14 eine Planspanflächenfase 34 ausgebildet. Die Planspanflächenfase 34 weist eine (senkrecht zur Planschneidkante 14 zu messende) Breite b2 im Bereich von 0,1-0,4 mm auf. Dabei kann die Breite der Planspanflächenfase 34 insbesondere z.B. der Breite der Hauptspanflächenfase 32 entsprechen. Die Planspanflächenfase 34 hat einen negativen nominellen Fasenwinkel β, wie in Fig. 4 zu sehen ist. Der nominelle Fasenwinkel β der Planspanflächenfase 34 ist dabei kleiner als der nominelle Fasenwinkel γ der Hauptspanflächenfase 32. Bei der Ausführungsform ist der nominelle Fasenwinkel β der Planspanflächenfase 34 zumindest 8° kleiner, bevorzugt zumindest 10° kleiner, als der nominelle Fasenwinkel γ der Hauptspanflächenfase 32. Z.B kann bei einer Realisierung der nominelle Fasenwinkel γ der Hauptspanflächenfase 32 in etwa -2,5° betragen und der nominelle Fasenwinkel β der Planspanflächenfase 34 in etwa -13°.

Entlang den Hauptschneiden 12 sind in der umlaufenden Seitenfläche 6 Hauptfreiflächen 22 gebildet, wie insbesondere in den Fig. 1, Fig. 5 und Fig. 6 zu sehen ist. Bei der dargestellten Ausführungsform sind die Hauptfreiflächen 22 jeweils als ebene Flächen ausgebildet, die sich von einer angehobenen Schneidecke 16 bis zu einer abgesenkten Schneidecke 18 entlang der gesamten zugehörigen Hauptschneide 12 erstrecken. Die Hauptfreifläche 22 entfernt sich mit zunehmenden Abstand von der zugeordneten Hauptschneide 12 von der Symmetrieachse S. Mit anderen Worten erstreckt sich die Hauptfreifläche 22 unter einem negativen nominellen Hauptfreiwinkel ε, wie in Fig. 3 zu sehen ist. Eine Hauptfreifläche 22, die einer Hauptschneide 12 der ersten Schneidkante 8 zugeordnet ist, erstreckt sich in etwa bis zu der Referenzebene R und geht dort in eine Hauptfreifläche 22 über, die einer Hauptschneide 12 der zweiten Schneidkante 10 zugeordnet ist. Aufgrund des negativen nominellen Hauptfreiwinkels ε schließen die benachbarten Hauptfreiflächen 22 der ersten Schneidkante 8 und der zweiten Schneidkante 10 dabei einen Außenwinkel > 180° miteinander ein, wie in Fig. 3 zu sehen ist. Obwohl sich bei der Ausführungsform die Hauptfreiflächen 22 jeweils in etwa bis zu der Referenzebene R erstrecken und dort in die Hauptfreiflächen 22 der gegenüberliegenden Schneidkante übergehen, ist es z.B. auch möglich, dass zwischen diesen ein oder mehrere weitere Flächen in der umlaufenden Seitenfläche 6 vorgesehen sind.

Entlang den Planschneiden 14 sind in der umlaufenden Seitenfläche 6 Planfreiflächen 24 ausgebildet, wie insbesondere in den Fig. 1, Fig. 5 und Fig. 6 zu sehen ist. Bei der dargestellten Ausführungsform sind die Planfreiflächen 24 jeweils als ebene Flächen ausgebildet, die sich von einer angehobenen Schneidecke 16 bis zu einer abgesenkten Schneidecke 18 entlang der gesamten zugehörigen Planschneide 14 erstrecken. Die Planfreifläche 24 nähert sich mit zunehmendem Abstand von der zugeordneten Planschneide 14 der Symmetrieachse S an. Mit anderen Worten erstreckt sich die Planfreifläche 24 unter einem positiven nominellen Planfreiwinkel η, wie in Fig. 4 zu sehen ist. Eine Planfreifläche 24, die einer Planschneide 14 der ersten Schneidkante 8 zugeordnet ist, erstreckt sich in etwa bis zu der Referenzebene R und geht dort in eine Planfreifläche 24 über, die einer Planschneide 14 der zweiten Schneidkante 10 zugeordnet ist. Aufgrund des positiven nominellen Planfreiwinkels η schließen die benachbarten Planfreiflächen 24 der ersten Schneidkante 8 und der zweiten Schneidkante 10 dabei einen stumpfen Außenwinkel, also einen Winkel < 180°, miteinander ein, wie in Fig. 4 zu sehen ist. Obwohl sich bei der Ausführungsform die Planfreiflächen 24 jeweils in etwa bis zu der Referenzebene R erstrecken und dort in die Planfreiflächen 24 der gegenüberliegenden Schneidkante übergehen, ist es z.B. auch möglich, eine oder mehrere weitere Flächen in der umlaufenden Seitenfläche 6 dazwischen vorzusehen.

Aufgrund der beschriebenen Ausgestaltung der Hauptfreiflächen 22 und der Planfreiflächen 24 ist die umlaufende Seitenfläche 6 somit im Bereich der Hauptschneiden 12 und Hauptfreiflächen 22 nach außen konvex vorgewölbt ausgebildet, wohingegen die umlaufende Seitenfläche 6 im Bereich der Planschneiden 14 und Planfreiflächen 24 nach innen konkav eingezogen ausgebildet ist.

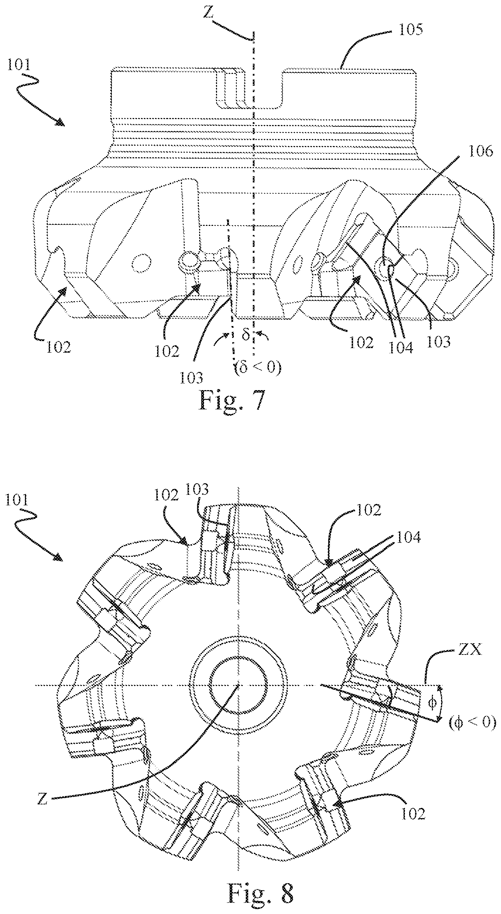

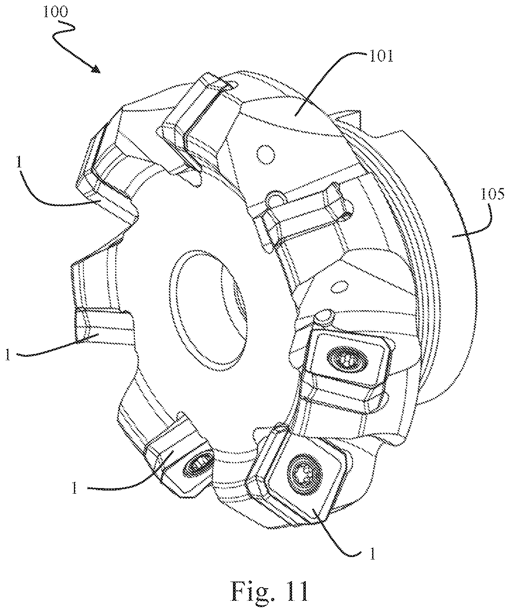

Ein Fräswerkzeug 100 zum Planfräsen wird im Folgenden unter Bezug auf die Fig. 7 bis Fig. 11 beschrieben, wobei zunächst mit Bezug auf die Fig. 7 und Fig. 8 ein Grundkörper 101 des Fräswerkzeugs 100 beschrieben wird.

Das Fräswerkzeug 100 hat einen Grundkörper 101, der ein erstes Ende 105 mit einer Schnittstelle zur Verbindung mit einer Spindel einer Bearbeitungsmaschine aufweist. An einem gegenüberliegenden anderen Ende ist der Grundkörper 101 mit einer Mehrzahl von Sitzen 102 zur Aufnahme der zuvor beschriebenen doppelseitigen Schneideinsätze 1 ausgebildet. Obwohl in den Figuren beispielhaft ein Grundkörper 101 dargestellt ist, der insgesamt mit sieben solchen Sitzen 102 versehen ist, sind auch Ausgestaltungen möglich, bei denen der Grundkörper 101 mehr als sieben oder weniger als sieben Sitze 102 aufweist. Die Sitze 102 sind über den Umfang des Grundkörpers 101 verteilt angeordnet und dazu ausgebildet, die doppelseitigen Schneideinsätze 1 mit der jeweils gleichen Ausrichtung aufzunehmen, wie im Folgenden noch eingehender beschrieben wird.

Wie insbesondere in Fig. 7 zu sehen ist, weist jeder Sitz 102 eine Hauptanlagefläche 103 auf, die dazu ausgebildet ist, dass sich der doppelseitige Schneideinsatz 1 mit einer seiner Hauptauflageflächen 26 an dieser abstützt. Der Sitz 102 weist ferner noch eine Mehrzahl von seitlichen Anlageflächen 104 auf, die derart ausgebildet sind, dass sich der Schneideinsatz 1 mit Hauptfreiflächen 22 an diesen abstützt. Die seitlichen Anlageflächen 104 sind dabei derart ausgebildet, dass sich der Schneideinsatz 1 mit der Unterseite 4 zugeordneten Hauptfreiflächen 22 abstützt, wenn er mit der Hauptauflagefläche 26 der Oberseite 2 an der Hauptanlagefläche 103 des Sitzes anliegt und vice versa. Durch den negativen nominellen Hauptfreiwinkel ε wird in dieser Weise eine formschlüssige Komponente bei der Befestigung des Schneideinsatzes 1 an dem Sitz 102 erzielt. An jedem Sitz 102 ist eine Gewindebohrung 106 zur Aufnahme eines Gewindeabschnitts einer Befestigungsschraube 200 ausgebildet, mit der der doppelseitige Schneideinsatz 1 an dem Sitz 102 befestigt werden kann.

Fig. 7 ist eine Seitenansicht des Grundkörpers 101 mit Blickrichtung senkrecht zur Rotationsachse Z des Grundkörpers 101 und senkrecht zu einer Flächennormalen der Hauptanlagefläche 103 eines Sitzes 102. Wie in Fig. 7 zu sehen ist, ist die Hauptanlagefläche 103 derart ausgerichtet, dass sie sich unter einem negativen axialen Einbauwinkel δ erstreckt. Der axiale Einbauwinkel δ ist dabei der Winkel, den die Hauptanlagefläche 103 mit der Rotationsachse Z des Grundkörpers 101 bei einer Blickrichtung senkrecht zur Rotationsachse Z und senkrecht zu der Flächennormalen der Hauptanlagefläche 103 einschließt. Die Hauptanlagefläche 103 ist also bezüglich der Rotationsachse Z des Grundkörpers 101 bzw. des Fräswerkzeugs 100 in Rotationsrichtung leicht nach vorne angekippt. Bei der Ausführungsform ist der axiale Einbauwinkel δ derart gewählt, dass er in einem Bereich von -1° bis -5° liegt, bevorzugt in einem Bereich von -2° bis -4°. Der axiale Einbauwinkel δ ist bei der Ausführungsform somit negativ gewählt, was es ermöglicht, inaktive Nebenschneiden 14 und Hauptschneiden 12 zuverlässig zu schützen. Andererseits ist der axiale Einbauwinkel δ aber nur sehr leicht negativ gewählt, was sich auf sehr vorteilhaft auf die Ausrichtung der aktiven Hauptschneide 12 auswirkt, wie im Folgenden noch eingehender beschrieben wird.

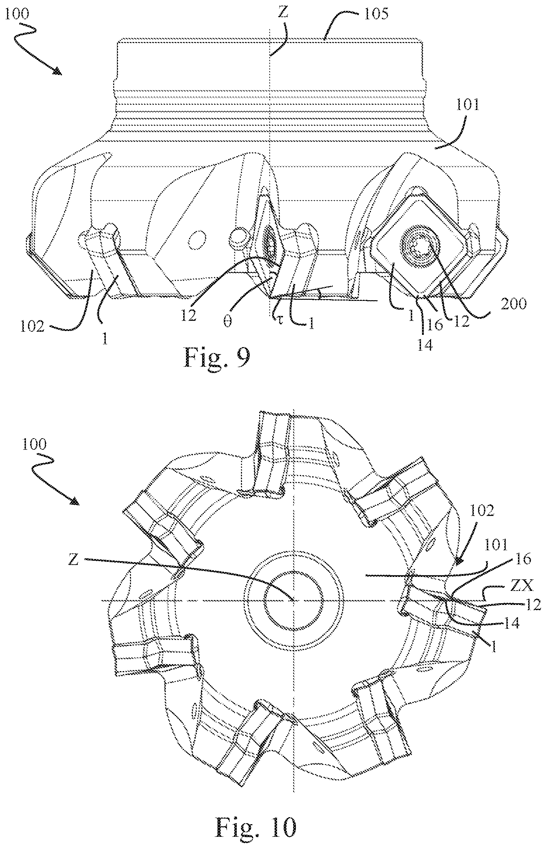

Die Hauptanlagefläche 103 ist ferner derart angeordnet, dass sie sich unter einem negativen radialen Einbauwinkel φ erstreckt, wie insbesondere in Fig. 8 zu sehen ist. Im eingebauten Zustand eines Schneideinsatzes 1 an einem Sitz 102 wird durch die Rotationsachse Z des Fräswerkzeugs 100 und die aktive angehobene Schneidecke 16, d.h. die zwischen der aktiven Hauptschneide 12 und der aktiven Nebenschneide 18 befindliche angehobene Schneidecke 16, des an dem Sitz 102 befestigten Schneideinsatzes 1 eine Ebene ZX aufgespannt, wie in Fig. 10 am Beispiel des rechts dargestellten Plattensitzes 102 gezeigt ist. Der radiale Einbauwinkel φ ist dabei für diesen Sitz 102 zwischen der Hauptanlagefläche 103 und dieser Ebene ZX zu messen, wie in Fig. 8 dargestellt ist. Die Hauptanlagefläche 103 ist somit bezüglich der radialen Richtung nach hinten verkippt. Bei der Ausführungsform ist der radiale Einbauwinkel φ derart gewählt, dass er in einem Bereich von -15° bis -21° liegt, bevorzugt in einem Bereich von -17° bis -19°. Der radiale Einbauwinkel φ ist somit bei der Ausführungsform ebenfalls negativ, aber dabei deutlich stärker negativ, also kleiner, als der axiale Einbauwinkel δ. Der radiale Einbauwinkel φ ist bei der Ausführungsform zumindest 10° kleiner als der axiale Einbauwinkel δ, bevorzugt kann er zumindest 15° kleiner sein.

Nun wird mit Bezug auf die Fig. 9 bis Fig. 11 noch das Fräswerkzeug 100 beschrieben, das resultiert, wenn zumindest ein Schneideinsatz 1 an einem Sitz 102 des Grundkörpers 101 befestigt ist. Die resultierende Ausrichtung der Schneidkanten wird dabei im Folgenden am Beispiel eines Sitzes 102 mit einem daran befestigten Schneideinsatz 1 beschrieben und es versteht sich, dass die Situation bei an den anderen Sitzen 102 befestigten Schneideinsätzen 1 entsprechend ist.

Der Schneideinsatz 1 wird derart mit einer Befestigungsschraube 200 an dem Sitz 102 befestigt, dass sich eine Hauptauflagefläche 26 (entweder der Oberseite 2 oder der Unterseite 4) an der Hauptanlagefläche 103 des Sitzes 102 abstützt und sich zwei Hauptfreiflächen 22 an den seitlichen Anlageflächen 104 abstützen.

In dieser Einbausituation ist eine Planschneide 14 des Schneideinsatzes 1 derart ausgerichtet, dass sie in axialer Richtung von dem Grundkörper 101 vorsteht. Die Planschneide 14 erstreckt sich dabei im Wesentlichen in einer Ebene senkrecht zu der Rotationsachse Z des Grundkörpers 101, wie in Fig. 9 zu sehen ist. Bezüglich der Rotationsachse Z radial außen ist eine Hauptschneide 12 über eine angehobene Schneidecke 16 mit dieser Planschneide 14 verbunden. Diese Planschneide 14 und die mit dieser über die angehobene Schneidecke 16 verbundene Hauptschneide 12 bilden eine aktive Planschneide 14 und eine aktive Hauptschneide 12, die derart angeordnet sind, dass sie mit dem zu bearbeitenden Material in Eingriff gelangen. Die anderen Planschneiden 14 und Hauptschneiden 12 bilden "inaktive" Planschneiden und Hauptschneiden, die nicht mit dem zu bearbeitenden Material in Eingriff gelangen und durch Indexierung zur Verwendung kommen können, wenn der aktive Schneidkantenabschnitt abgenutzt ist.

Durch die Kombination der zuvor beschriebenen, an dem Schneideinsatz 1 selbst realisierten nominellen Winkel und Verläufe der einzelnen Flächen mit den durch die Ausrichtung des Sitzes 102 bedingten Winkeln und Ausrichtungen ergibt sich bei der Ausführungsform eine besonders vorteilhafte effektive Anordnung der aktiven Hauptschneide 12 und der aktiven Nebenschneide 14 gegenüber dem zu bearbeitenden Werkstück. Dies wird im Folgenden mit Bezug auf die Fig. 9 und Fig. 10 eingehender erläutert.

In dem eingebauten Zustand erstreckt sich die aktive Hauptschneide 12 unter einem sehr großen effektiven Axialwinkel θ, wie insbesondere in Fig. 9 zu sehen ist. Der effektive Axialwinkel θ liegt bei der Ausführungsform im Bereich von 16°-24°, bevorzugt im Bereich von 18°-22°. Dies ermöglicht einen besonders weichen Schnitt beim Planfräsen. Der effektive Axialwinkel θ ist dabei zwischen der aktiven Hauptschneide 12 und der Rotationsachse Z des Fräswerkzeugs 100 in einer Blickrichtung in radialer Richtung zu bestimmen, bei der die Rotationsachse Z das an die angehobene Schneidecke 16 angrenzende Ende der aktiven Hauptschneide 12 schneidet.

Der an der aktiven Planschneide 14 ausgebildete effektive Planfreiwinkel τ, der insbesondere in Fig. 9 zu sehen ist, liegt in dem eingebauten Zustand im Bereich von 8°- 12°. Aufgrund der stark negativen radialen Einbaulage liegt auch der an der aktiven Hauptschneide 12 ausgebildete effektive Hauptfreiwinkel im Bereich von 8°-12°. Bevorzugt können dabei z.B. der effektive Planfreiwinkel und der effektive Hauptfreiwinkel im Wesentlichen gleich groß sein. Der effektive Hauptfreiwinkel ist dabei zwischen der der aktiven Hauptschneide 12 zugeordneten Hauptfreifläche 22 und der Hüllkurve zu messen, die die Hauptschneide 12 bei einer Rotation des Fräswerkzeugs 100 um die Rotationsachse Z erzeugt.

Durch die Kombination der zuvor beschriebenen Ausgestaltung der Planspanflächenfase 34 mit ihrem an dem Schneideinsatz 1 realisierten nominellen Fasenwinkel, der Hauptspanflächenfase 32 mit ihrem an dem Schneideinsatz realisierten nominellen Fasenwinkel und die sowohl axial wie radial verkippte Einbaulage ergibt sich, dass im eingebauten Zustand ein effektiver Fasenwinkel der Planspanflächenfase 34 und ein effektiver Fasenwinkel der Hauptspanflächenfase 32 im Wesentlichen gleich groß sind.

Durch die Kombination von Merkmalen der Ansprüche wird erreicht, dass trotz der Beschränkungen, die die Realisierung eines Schneideinsatzes als doppelseitiger Schneideinsatz der Anordnung auferlegt, beim Planfräsen ein sehr weicher Schnitt und ein besonders stabiler Fräsprozess ermöglicht werden.

## Patentansprüche

1. Doppelseitiger Schneideinsatz zum Fräsen mit:
einer Oberseite (2),
einer Unterseite (4),
einer umlaufenden Seitenfläche (6),
einer ersten Schneidkante (8), die an einem Übergang von der Oberseite (2) zu der umlaufenden Seitenfläche (6) ausgebildet ist,
einer zweiten Schneidkante (10), die an einem Übergang von der Unterseite (4) zu der umlaufenden Seitenfläche (6) ausgebildet ist,
einer Symmetrieachse (S), bezüglich der der Schneideinsatz vierzählige Rotationssymmetrie aufweist,
und einer senkrecht zu der Symmetrieachse (S) verlaufenden Referenzebene (R), die den Schneideinsatz in zwei Hälften unterteilt,
wobei die erste Schneidkante (8) und die zweite Schneidkante (10) jeweils aufweisen:
alternierend angeordnete Hauptschneiden (12) und Planschneiden (14), die sich jeweils zwischen angehobenen Schneidecken (16) und
abgesenkten Schneidecken (18), die einen geringeren Abstand zu der Referenzebene (R) als die angehobenen Schneidecken (16) haben, erstrecken,
wobei die umlaufende Seitenfläche (6) sich jeweils entlang der Planschneide (14) erstreckende Planfreiflächen (24) aufweist,
wobei die umlaufende Seitenfläche (6) sich jeweils entlang der Hauptschneide (12) erstreckende Hauptfreiflächen (22) aufweist, die sich mit zunehmendem Abstand von der zugeordneten Hauptschneide (12) von der Symmetrieachse (S) entfernen,
**dadurch gekennzeichnet,**
**dass** die Planfreiflächen (24) mit zunehmendem Abstand von der zugeordneten Planschneide (14) der Symmetrieachse (S) annähern.

2. Schneideinsatz nach Anspruch 1, wobei der Schneideinsatz eine in Aufsicht auf die Oberseite (2) im Wesentlichen quadratische Grundform mit abgeschrägten Ecken aufweist, sich die Hauptschneiden (12) entlang den Hauptseiten der quadratischen Grundform und sich die Planschneiden (14) entlang den abgeschrägten Ecken erstrecken.

3. Schneideinsatz nach Anspruch 1 oder 2, wobei die erste Schneidkante (8) und die zweite Schneidkante (10) jeweils durch vier Hauptschneiden (12) und vier Planschneiden (14), die über die angehobenen Schneidecken (16) und die abgesenkten Schneidecken (18) miteinander verbunden sind, gebildet sind.

4. Schneideinsatz nach einem der vorangehenden Ansprüche, wobei die Hauptschneiden (12) in Aufsicht auf die Oberseite (2) bzw. auf die Unterseite (4) jeweils einen Innenwinkel (α, α') im Bereich zwischen 130° und 140° mit den benachbarten Planschneiden (14) aufweisen.

5. Schneideinsatz nach einem der vorangehenden Ansprüche, wobei sich die Planfreiflächen (24) jeweils als ebene Flächen entlang der gesamten Planschneide (14) von einer angehobenen Schneidecke (16) bis zu einer abgesenkten Schneidecke (18) erstrecken.

6. Schneideinsatz nach einem der vorangehenden Ansprüche, wobei sich die Hauptfreiflächen (22) jeweils als ebene Flächen entlang der gesamten Hauptschneide (12) von einer angehobenen Schneidecke (16) bis zu einer abgesenkten Schneidecke (18) erstrecken.

7. Schneideinsatz nach einem der vorangehenden Ansprüche, wobei die Oberseite (2) und die Unterseite (4) jeweils angrenzend an die Hauptschneiden (12) mit einer Hauptspanflächenfase (32) und angrenzend an die Planschneiden (14) mit einer Planspanflächenfase (34) versehen sind.

8. Schneideinsatz nach Anspruch 7, wobei ein nomineller Fasenwinkel (β) der Planspanflächenfase (34) kleiner als ein nomineller Fasenwinkel (γ) der Hauptspanflächenfase (32) ist.

9. Schneideinsatz nach Anspruch 8, wobei der nominelle Fasenwinkel (β) der Planspanflächenfase (34) zumindest 8° kleiner, bevorzugt zumindest 10° kleiner, als der nominelle Fasenwinkel (γ) der Hauptspanflächenfase (32) ist.

10. Fräswerkzeug (100) mit einem Grundkörper (101), der zumindest einen Sitz (102) zur Aufnahme eines Schneideinsatzes und zumindest einen an dem Sitz (102) angeordneten Schneideinsatz (1) nach einem der vorangehenden Ansprüche aufweist.

11. Fräswerkzeug nach Anspruch 10, wobei der Sitz (102) eine Hauptanlagefläche (103) zur Abstützung einer sich parallel zu der Referenzebene (R) erstreckenden Hauptauflagefläche (26) des Schneideinsatzes (1) aufweist und sich die Hauptanlagefläche (103) unter einem negativen axialen Einbauwinkel (δ) und unter einem negativen radialen Einbauwinkel (φ) erstreckt,
wobei radiale Einbauwinkel (φ) zumindest 10° kleiner als der axiale Einbauwinkel (δ) ist, bevorzugt zumindest 15° kleiner.

12. Fräswerkzeug nach Anspruch 11, wobei der axiale Einbauwinkel (δ) in einem Bereich von -1° bis -5° liegt, bevorzugt in einem Bereich von -2° bis -40.

13. Fräswerkzeug nach Anspruch 11 oder 12, wobei der radiale Einbauwinkel (φ) in einem Bereich von -15° bis -21° liegt, bevorzugt in einem Bereich von -17° bis -19°.

14. Fräswerkzeug nach einem der Ansprüche 10 bis 13, wobei der Schneideinsatz (1) derart angeordnet ist, dass sich eine aktive Hauptschneide (12) unter einem effektiven Axialwinkel (θ) im Bereich von 16°-24°, bevorzugt 18°-22° erstreckt.

15. Fräswerkzeug nach einem der Ansprüche 10 bis 14, wobei der Schneideinsatz derart angeordnet ist, dass der an der aktiven Hauptschneide (12) ausgebildete effektive Hauptfreiwinkel im Bereich von 8°-12° liegt und der an der aktiven Planschneide (14) ausgebildete effektive Planfreiwinkel (τ) im Bereich von 8°- 12° liegt.

16. Fräswerkzeug nach einem der Ansprüche 10 bis 15, wobei der Schneideinsatz (1) mit einer Planspanflächenfase (34) und mit einer Hauptspanflächenfase (32) versehen und derart angeordnet ist, dass ein effektiver Fasenwinkel der Planspanflächenfase (34) und ein effektiver Fasenwinkel der Hauptspanflächenfase (32) im eingebauten Zustand im Wesentlichen gleich groß sind.

## Claims

1. A double-sided cutting insert for milling, comprising:
a top side (2),
a bottom side (4),
a circumferential lateral surface (6),
a first cutting edge (8) which is formed at a transition from the top side (2) to the circumferential lateral surface (6),
a second cutting edge (10) which is formed at a transition from the bottom side (4) to the circumferential lateral surface (6),
an axis of symmetry (S) relative to which the cutting insert has a fourfold rotational symmetry,
and a reference plane (R) running perpendicularly to the axis of symmetry (S) and dividing the cutting insert into two halves,
wherein the first cutting edge (8) and the second cutting edge (10) each comprise:
alternately arranged main cutters (12) and face cutters (14), each extending between raised cutting corners (16) and lowered cutting corners (18) which are closer to the reference plane (R) than the raised cutting corners (16),
wherein the circumferential lateral surface (6) has face clearance surfaces (24) which each extend along the face cutter (14),
wherein the circumferential lateral surface (6) has main clearance surfaces (22) which each extend along the main cutter (12) and which become further away from the axis of symmetry as the distance from
the associated main cutter (12) increases **characterized in that** the face clearance surfaces (24) become closer to
the axis of symmetry (S) as the distance from the associated face cutter (14) increases.

2. The cutting insert as claimed in claim 1, wherein the cutting insert has, in a view onto the top side (2), a substantially square base form with angled corners, the main cutters (12) extend along the main sides of the square base form and the face cutters (14) extend along the angled corners.

3. The cutting insert as claimed in claim 1 or 2, wherein the first cutting edge (8) and the second cutting edge (10) are each formed by four main cutters (12) and four face cutters (14) which are connected together via the raised cutting corners (16) and the lowered cutting corners (18).

4. The cutting insert as claimed in any of the preceding claims, wherein the main cutters (12), viewed onto the top side (2) or onto the bottom side (4), each have an internal angle (α, α') in the range between 130° and 140° with the adjacent face cutters (14).

5. The cutting insert as claimed in any of the preceding claims, wherein the face clearance surfaces (24) each extend as a flat surface along the entire face cutter (14) from a raised cutting corner (16) to a lowered cutting corner (18).

6. The cutting insert as claimed in any of the preceding claims, wherein the face clearance surfaces (22) each extend as a flat surface along the entire main cutter (12) from a raised cutting corner (16) to a lowered cutting corner (18).

7. The cutting insert as claimed in any of the preceding claims, wherein the top side (2) and the bottom side (4) are each provided with a main rake surface chamfer (32) adjacent to the main cutters (12) and with a face rake surface chamfer (34) adjacent to the face cutters (14).

8. The cutting insert as claimed in claim 7, wherein a nominal chamfer angle (β) of the face rake surface chamfer (34) is smaller than a nominal chamfer angle (γ) of the main rake surface chamfer (32).

9. The cutting insert as claimed in claim 8, wherein the nominal chamfer angle (β) of the face rake surface chamfer (34) is at least 8° smaller, preferably at least 10° smaller than the nominal chamfer angle (γ) of the main rake surface chamfer (32).

10. A milling tool (100) with a base body (101) which has at least one seat (102) for receiving a cutting insert, and at least one cutting insert (1) as claimed in any of the preceding claims arranged on the seat (102).

11. The milling tool as claimed in claim 10, wherein the seat (102) has a main support surface (103) for supporting a main contact surface (26) of the cutting insert (1) extending parallel to the reference plane (R), and the main support surface (103) extends at a negative axial installation angle (δ) and at a negative radial installation angle (φ),
wherein the radial installation angle (φ) is at least 10° smaller than the axial installation angle (δ), preferably at least 15° smaller.

12. The milling tool as claimed in claim 11, wherein the axial installation angle (δ) lies in a range from -1° to -5°, preferably in a range from -2° to -4°.

13. The milling tool as claimed in claim 11 or 12, wherein the radial installation angle (φ) lies in a range from -15° to -21°, preferably in a range from -17° to -19°.

14. The milling tool as claimed in any of claims 10 to 13, wherein the cutting insert (1) is arranged such that an active main cutter (12) extends at an effective axial angle (θ) in the range from 16°- 24°, preferably 18°- 22°.

15. The milling tool as claimed in any of claims 10 to 14, wherein the cutting insert is arranged such that the effective main clearance angle formed at the active main cutter (12) lies in the range from 8°- 12° and the effective face clearance angle (τ) formed at the active face cutter (14) lies in the range from 8°- 12°.

16. The milling tool as claimed in any of claims 10 to 15, wherein the cutting insert (1) is provided with a face rake surface chamfer (34) and with a main rake surface chamfer (32), and is arranged such that in the installed state, an effective chamfer angle of the face rake surface chamfer (34) and an effective chamfer angle of the main rake surface chamfer (32) are substantially the same size.

## Revendications

1. Insert de coupe double face pour le fraisage, avec :
- une face supérieure (2),
- une face inférieure (4),
- une surface latérale périphérique (6),
une première arête de coupe (8), qui est réalisée au niveau d'une transition entre la face supérieure (2) et la surface latérale périphérique (6),
une deuxième arête de coupe (10), qui est réalisée au niveau d'une transition entre la face inférieure (4) et la surface latérale périphérique (6),
un axe de symétrie (S), par rapport auquel l'insert de coupe présente une symétrie de rotation d'ordre 4,
et un plan de référence (R) s'étendant perpendiculairement par rapport à l'axe de symétrie (S), qui divise l'insert de coupe en deux moitiés,
dans lequel la première arête de coupe (8) et la deuxième arête de coupe (10) présentent chacune :
des tranchants principaux (12) et des tranchants plats (14) disposés de manière alternée, qui s'étendent respectivement entre des angles de coupe surélevés (16) et des angles de coupe abaissés (18), qui présentent une distance plus faible, par rapport au plan de référence (R), que les angles de coupe surélevés (16),
dans lequel la surface latérale périphérique (6) comprend des surfaces dégagées planes (24) s'étendant chacune le long du tranchant plat (14),
dans lequel la surface latérale périphérique (6) comprend des surfaces dégagées principales (22) s'étendant chacune le long du tranchant principal (12), qui s'éloignent de l'axe de symétrie (S) avec une distance croissante par rapport au tranchant principal (12) correspondant,
**caractérisé en ce que**
les surfaces dégagées planes (24) se rapprochent de l'axe de symétrie (S) avec une distance croissante par rapport au tranchant plat (14) correspondant.

2. Insert de coupe selon la revendication 1, dans lequel l'insert de coupe présente, en vue de dessus de la face supérieure (2), une forme de base globalement carrée avec des angles chanfreinés, les tranchants principaux (12) s'étendent le long des faces principales de la forme de base carrée et les tranchants plats (14) s'étendent le long des angles chanfreinés.

3. Insert de coupe selon la revendication 1 ou 2, dans lequel la première arête de coupe (8) et la deuxième arête de coupe (10) sont constituées chacune par quatre tranchants principaux (12) et quatre tranchants plats (14), qui sont reliés entre eux par l'intermédiaire des angles de coupe surélevés (16) et des angles de coupe abaissés (18).

4. Insert de coupe selon l'une des revendications précédentes, dans lequel les tranchants principaux (12) présentent chacune, en vue de dessus de la face de la face supérieure (2) ou de la face inférieure (4), un angle interne (α, α') dans la plage entre 130° et 140° avec les tranchants plats (14) adjacents.

5. Insert de coupe selon l'une des revendications précédentes, dans lequel les surfaces dégagées planes (24) s'étendent respectivement sous la forme de surfaces planes le long de tout le tranchant plat (14), d'un angle de coupe surélevé (16) jusqu'à un angle de coupe abaissé (18) .

6. Insert de coupe selon l'une des revendications précédentes, dans lequel les surfaces dégagées principales (22) s'étendent respectivement sous la forme de surfaces planes le long de tout le tranchant principal (12) d'un angle de coupe surélevé (16) jusqu'à un angle de coupe abaissé (18).

7. Insert de coupe selon l'une des revendications précédentes, dans lequel la face inférieure (2) et la face supérieure (4) sont munies chacune, de manière adjacente aux tranchants principaux (12), d'un chanfrein de face de coupe principale (32), de manière adjacente aux tranchants plats (14), d'un chanfrein de face de coupe plane (34).

8. Insert de coupe selon la revendication 7, dans lequel un angle de chanfrein nominal (β) du chanfrein de face de coupe plane (34) est inférieur à un angle de chanfrein nominal (γ) du chanfrein de face de coupe principale (32).

9. Insert de coupe selon la revendication 8, dans lequel l'angle de chanfrein nominal (β) du chanfrein de face de coupe plane (34) est inférieur d'au moins 8°, de préférence d'au moins 10°, à l'angle de chanfrein nominal (γ) du chanfrein de face de coupe principale (32).

10. Outil de fraisage (100) avec un corps de base (101) qui comprend au moins un siège (102) pour le logement d'un insert de coupe et au moins un insert de coupe (1), selon l'une des revendications précédentes, disposé sur le siège (102).

11. Outil de fraisage selon la revendication 10, dans lequel le siège (102) comprend une surface d'appui principale (103) pour l'appui d'une surface d'appui principale (26) de l'insert de coupe (1), s'étendant parallèlement au plan de référence (R) et la surface d'appui principale (103) s'étend avec un angle de montage axial négatif (δ) et avec un angle de montage radial négatif (ϕ),
dans lequel l'angle de montage radial (ϕ) est inférieur d'au moins 10° à l'angle de montage axial (δ), de préférence inférieur d'au moins 15°.

12. Outil de fraisage selon la revendication 11, dans lequel l'angle de montage axial (δ) est de l'ordre de -1° à -5°, de préférence de l'ordre de -2° à -4°.

13. Outil de fraisage selon la revendication 11 ou 12, dans lequel l'angle de montage radial (ϕ) est de l'ordre de -15° à -21°, de préférence de l'ordre de -17° à -19°.

14. Outil de fraisage selon l'une des revendications 10 à 13, dans lequel l'insert de coupe (1) est disposé de façon à ce qu'un tranchant principal actif (12) s'étende avec un angle axial effectif (θ) de l'ordre de 16 à 24°, de préférence de 18° à 22°.

15. Outil de fraisage selon l'une des revendications 10 à 14, dans lequel l'insert de coupe est disposé de façon à ce que l'angle dégagé principal effectif réalisé au niveau du tranchant principal actif (12) soit de l'ordre de 8° à 12° et l'angle dégagé plan effectif (τ) réalisé au niveau du tranchant plat actif (14) est de l'ordre de 8° à 12°.

16. Outil de fraisage selon l'une des revendications 10 à 15, dans lequel l'insert de coupe (1) est muni d'un chanfrein de face de coupe plane (34) et d'un chanfrein de face de coupe principale (32) et est disposé de façon à ce qu'un angle de chanfrein effectif du chanfrein de face de coupe plane (34) et un angle de chanfrein effectif du chanfrein de face de coupe principale (32) sont globalement égaux dans l'état monté.
